# EUROPEAN PATENT SPECIFICATION

(11) **EP 1 157 611 B1**
(45) Date of publication and mention of the grant of the patent: **17.11.2004**
(21) Application number: 01105936.7
(22) Date of filing: 09.03.2001
(51) Int. Cl.: A01M 29/02

(54) **Solar-powered ultrasonic animal repeller**
Solarultraschallgerät zum Vertreiben von Tieren
Appareil ultrasonique à énergie solaire pour repousser les animaux

(30) Priority: 23.05.2000 JP 2000151233
(43) Date of publication of application: 28.11.2001
(73) Proprietor: Matsushita Electric Works, Ltd., Kadoma-shi, Osaka (JP)
(72) Inventor: Kawaguchi, Masahiro, Kadoma-shi, Osaka (JP); Akiyama, Shouichi, Kadoma-shi, Osaka (JP); Hiramatsu, Takaaki, Kadoma-shi, Osaka (JP)
(74) Representative: Dallmeyer, Georg, Dipl.-Ing.

(56) References cited:
- CA-A- 2 207 361
- DE-A- 19 955 102
- US-A- 5 602 523

## Description

### BACKGROUND OF THE INVENTION

### (Field of the Invention)

The present invention generally relates to a multidirectional ultrasonic transmitter and, more particularly, to an ultrasonic animal repeller for transmitting ultrasonic waves in a plurality of directions for repelling or dispelling one or more relatively small animals entering areas of coverage surveyed by the ultrasonic waves.

For the purpose of the invention herein disclosed, the term "small animals" herein used is intended to encompass cats, dogs, birds, weasels, raccoons, deer or like animals that are, regardless of whether domestic or wild, considered offensive, harmful or objectionable in any way whatsoever when they approach or enter restricted areas or estates.

### (Description of the Prior Art)

An ultrasonic animal repeller including a detecting means and an ultrasonic wave generating means has been developed and used in practice for the purpose of keeping one or more small animals off from, for example, a property or playground sandpit. In general, the known ultrasonic animal repeller is so designed that when a sensor forming a part of the detecting means detects entry of a small animal into a surveyed area an ultrasonic waves are outputted to prevent the small animal from approaching nearby to thereby avoid excreta-based displeasure. Since the ultrasonic waves are imperceptible to the human ears, there is no possibility that people will feel discomfort.

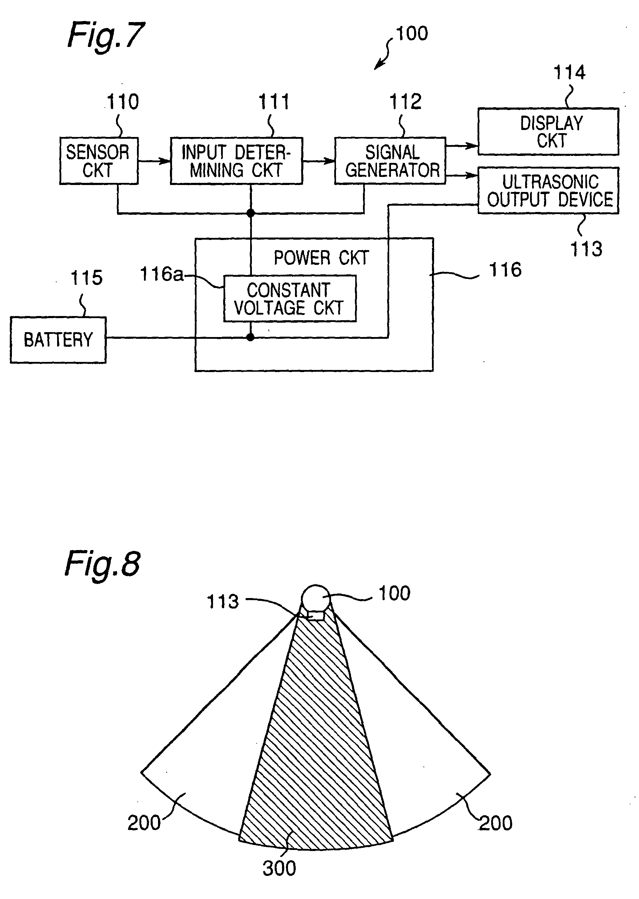

Specifically, the prior art ultrasonic animal repeller 100 has such an internal electric circuitry as shown in Fig. 7. The circuitry includes a sensor circuit 110 for detecting a small animal or heat entering in or present in a predetermined area (sensor surveillance area). An input determining circuit 111 utilizes an input voltage or an input timing from the sensor circuit 110 in determining whether the small animal has been detected or whether an erroneous operation resulting from noises has occurred. A signal generator 112 is operable to generate a signal necessary to output an ultrasonic wave. By way of example, the signal generator 12 may generate a signal having a repetition of an ON state for 1.5 second and an OFF state for 1.5 second at a frequency of 25 kHz.

A ultrasonic output circuits 113 is operable in response to the signal from the signal generator 112 to output an ultrasonic wave. An operation display circuit 114 is operable to turn on or blink an indicator lamp during operation of the ultrasonic animal repeller 100. A power circuit 116 includes a constant voltage circuit 116a for generating a constant voltage based on the power supplied from a battery power source 115 and then to supply it to various electric component parts.

Fig. 8 illustrates a sensor surveillance area and an ultrasonic output coverage of the prior art ultrasonic animal repeller 100. When a small animal such as, for example, a cat and/or a dog enters the sensor surveillance area 200, the sensor circuit 110 detects an entry of the small animal and triggers an ultrasonic output device 13 to generate an ultrasonic wave. The small animal entering the ultrasonic output coverage 300 will feel discomfort with the ultrasonic wave and will therefore be driven away.

However, the prior art ultrasonic animal repeller makes use of a power source in the form of a battery (one or more dry cells) that requires a regular replacement. Accordingly, once the user forgets replacement of the worn battery with a fresh one, the ultrasonic animal repeller will no longer operate.

US-A-5602523 fails to specify the locations of both the solar power supply with battery and the audio driver on the repeller body. That is, this reference does not disclose effective utilisation of top face (roof) and a front face of the repeller body. The same applies to CA-A-2207361 and DE-A-19955101.

The present invention has been developed in view of the foregoing and is intended to provide an ultrasonic animal repeller that allows the solar battery to receive solar energies at all times and on the other hand to save space required for the ultrasonic animal repeller itself and also for the installation of the ultrasonic animal repeller

In order to accomplish the foregoing object, the present invention provides an ultrasonic animal repeller according to claim 1. Since the use of the solar battery does not require replacement such as required where one or more dry cells are employed, the ultrasonic animal repeller according to the present invention is substantially free from maintenance. Also, there is no possibility of the ultrasonic animal repeller failing to operate as a result of failure to replace the battery. Mounting of the solar battery on the roof is particularly advantageous in that the solar battery can be exposed to the sun at all times and, also, in that no extra space for installation of the solar battery is required to thereby accomplish a space saving.

The use of a plurality of solar batteries is preferred, in which case the solar batteries are connected in series with each other. Series-connection, of the solar batteries makes it possible to provide a relatively high electric power to be supplied to the ultrasonic output device so that a relatively high ultrasonic sound pressure can be obtained to enhance an anti-animal effect, that is, an effect of repelling the small animal.

### BRIEF DESCRIPTION OF THE DRAWINGS

The present invention will become readily understood from the following description of preferred embodiments thereof made with reference to the accompanying drawings, in which like parts are designated by like reference numeral and in which:
Fig. 1 is a block diagram an electric circuitry employed in an ultrasonic animal repeller embodying the present invention;
Figs. 2A and 2B are schematic front and top plan views, showing installation of solar cells in the ultrasonic animal repeller;
Fig. 3 is a block diagram showing a charging circuit used in the electric circuitry of Fig. 1;
Fig. 4 is a flowchart showing the sequence of operation of the ultrasonic animal repeller according to the present invention;
Fig. 5 is a block diagram showing a modified electric circuitry that can be employed in the ultrasonic animal repeller according to the present invention;
Fig. 6 is a block diagram showing the charging circuit used in the modified electric circuitry of Fig. 5;
Fig. 7 is a block diagram showing an internal electric circuitry employed in the prior art ultrasonic animal repeller; and
Fig. 8 is a schematic diagram showing a relationship between a sensor surveillance area and an ultrasonic output coverage, both covered by the prior art ultrasonic animal repeller.

### DESCRIPTION OF THE EMBODIMENTS

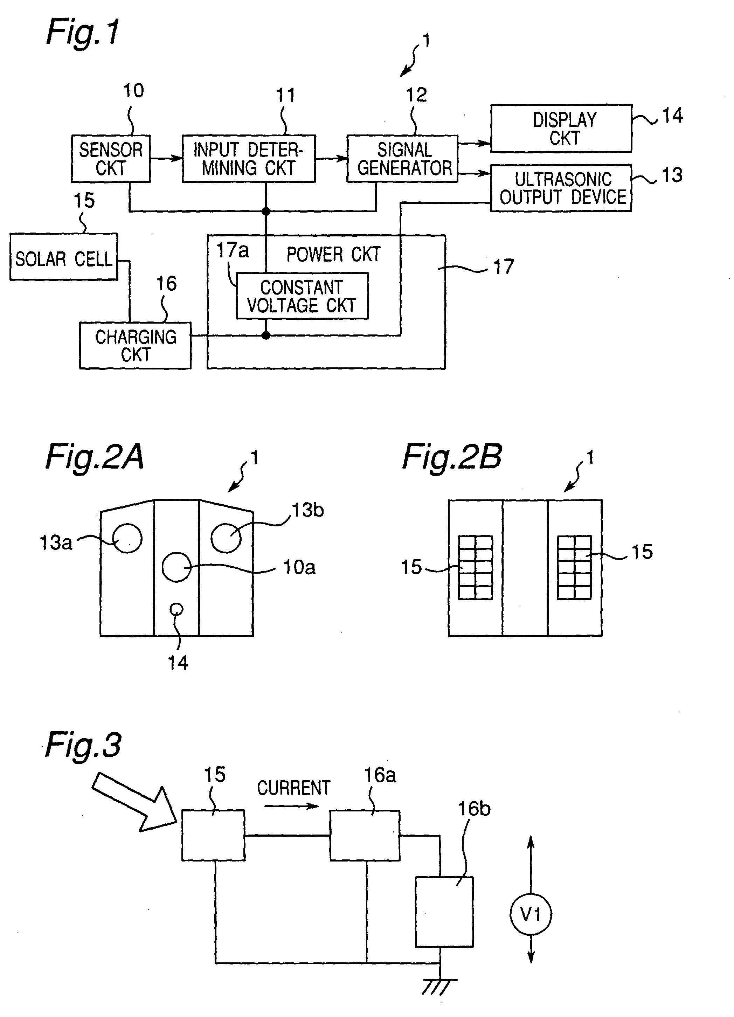

Referring now the accompanying drawings, Fig. 1 illustrates an internal circuitry of an ultrasonic animal repeller 1 embodying the present invention. The ultrasonic animal repeller 1 includes, in combination with a charging circuit 16, a solar battery 15 employed in place of one or more dry cells hitherto employed, for converting solar energies into an electric energy. The solar battery 15 may comprise at least one solar cell and is mounted on a roof of the ultrasonic animal repeller 1. The charging circuit 16 may comprise one or more capacitors or one or more secondary batteries (chargeable batteries) and is used to store an electric power generated by the solar battery 15.

The ultrasonic animal repeller 1 includes a sensor circuit 10 operable to detect a small animal or heat entering in or present in a predetermined area (sensor surveillance area 200 as shown in Fig. 8). An input determining circuit 11 utilizes an input voltage or an input timing from the sensor circuit 10 in determining whether the small animal has been detected or whether an erroneous operation resulting from noises has occurred. A signal generator 12 is operable to generate a signal necessary to output an ultrasonic wave. By way of example, the signal generator 12 may generate a signal having a repetition of an ON state for 1.5 second and an OFF state for 1.5 second for 10 seconds at a frequency of 25 kHz.

An ultrasonic output device 13 is operable in response to the signal from the signal generator 12 to emit an ultrasonic wave. An operation display circuit 14 connected with the signal generator 12 and parallel to the ultrasonic output device 13 is operable to lit or blink an indicator lamp to show that the ultrasonic animal repeller 1 is in operation. A power source circuit 17 includes a constant voltage circuit 17a for generating a constant voltage based on the power charged on the charging circuit 16 and then to supply it to various electric component parts.

So long as the ultrasonic animal repeller is supplied an electric power from the solar battery 15, there is no need to replace a worn battery such as required in the prior art ultrasonic animal repeller. Accordingly, there is no possibility that the ultrasonic animal repeller may cease its operation which would occur when the user fails to replace the worn battery such as often found with the prior art ultrasonic animal repeller. Also, the provision of the charging circuit 16 is effective to allow the ultrasonic animal repeller to continue its operation during night at which the solar battery will receive no solar energy, or even at the time little solar energy falls on the solar battery due to clouds or under shades.

Fig. 2 consisting of Figs. 2(a) and 2(b) schematically illustrate an outer appearance of the ultrasonic animal repeller 1 embodying the present invention, wherein Fig. 2(a) is a front elevational view and Fig. 2(b) is a top plan view. As shown therein, the solar battery 15 is mounted on a roof of the ultrasonic animal repeller 1 to allow the solar battery to receive solar energies at all times and, on the other hand, to save a space required for not only the ultrasonic animal repeller 1 itself but also installation of the ultrasonic animal repeller 1.

Fig. 2 also shows the use of two loudspeakers 13a and 13b for emitting ultrasonic sounds outputted from the ultrasonic output device 13. According to this design, it is possible to render the sensor surveillance area defined by a lens 10a of the sensor circuit 10 to encompass, or be encompassed, within the ultrasonic output coverage within which the ultrasonic sounds from the loudspeakers 13a and 13b propagate.

The operation of the charging circuit 16 will now be described with particular reference to Fig. 3. As shown therein, the charging circuit 16 includes a charge control circuit 16a and a charging unit 16b. The solar battery 15 upon receipt of solar energies generate a voltage and a current. The charge control circuit 16a controls a voltage V1 to be supplied to the charging unit 16b which in turn charges the controlled voltage V1.

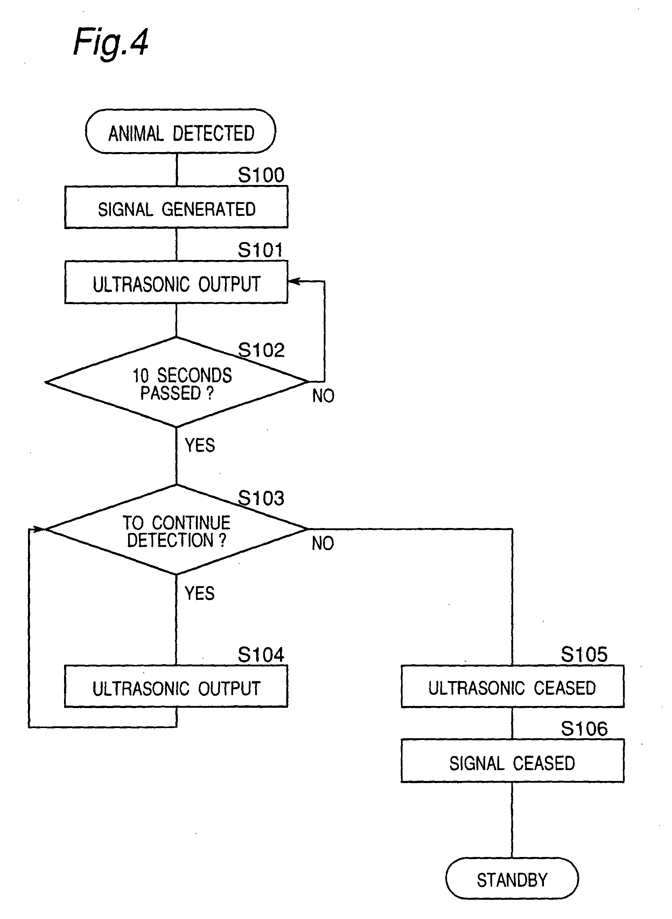

The sequence of operation of the solar-powered ultrasonic animal repeller 1 embodying the present invention will now be described with reference to the flowchart shown in Fig. 4. Once the sensor circuit 10 detects a small animal, the signal generator 12 generates a signal at step S100 and the ultrasonic output circuit 13 is then triggered thereby to generate an ultrasonic wave for 10 seconds at steps S101 and S102. If the sensor circuit 10 still continues detection of the small animal, generation of the ultrasonic wave continues at step S104 until the small animal is repelled away, but if the sensor circuit 10 no longer detect a small animal, generation of the ultrasonic wave is ceased at step S105, followed by cease of generation of the signal at step S106.

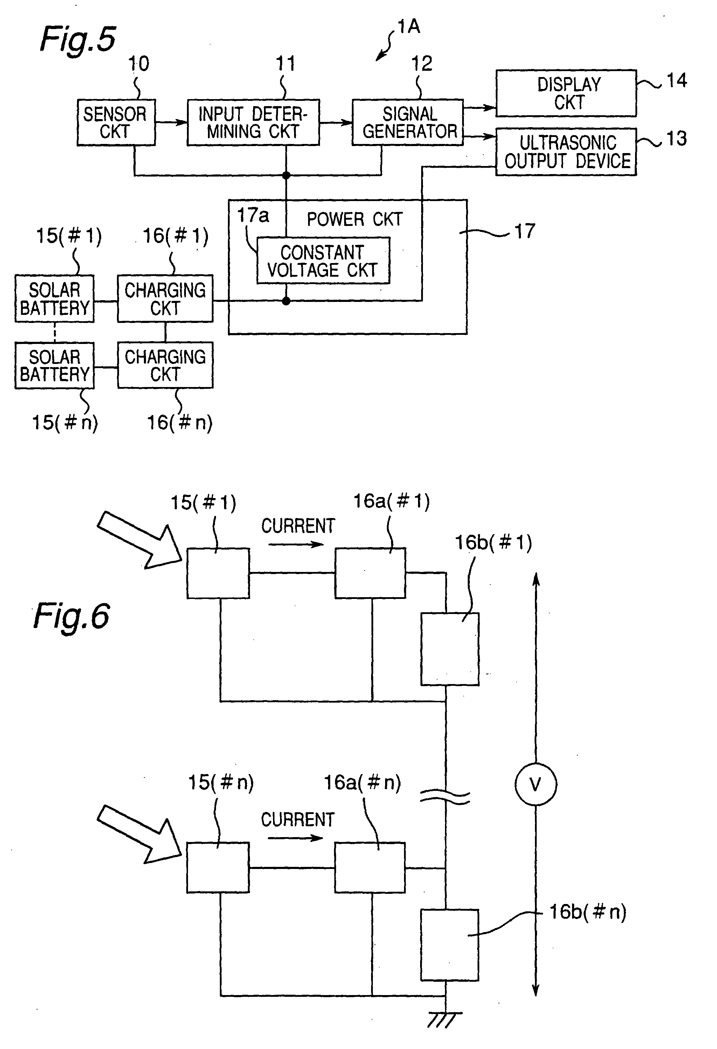

The solar-powered ultrasonic animal repeller according to another preferred embodiment of the present invention is shown by 1A in Fig. 5. Referring to Fig. 5, a plurality of solar batteries 15(#1) to 15(#n) are employed in combination with a corresponding number of charging circuits 16(#1) to 16(#n). Each of the solar batteries 15(#1) to 15(#n) may be identical with the solar battery shown in Fig. 1 and, hence, each of the charging circuit 16(#1) to 16(#n) is identical with the charging circuit 16 shown in Fig. 1.

Fig. 6 illustrates the charging circuits 16(#1) to 16(#n) each including a charge control circuit 16a(#1) to 16a(#n) and a corresponding charging unit 16b(#1) to 16(#n), both of which are identical with those shown in Fig. 1. As is the case with that shown in Fig. 1, each solar battery 15(#1) to 15(#n) upon receipt of solar energies generate a voltage and a current. Each charge control circuit 16a(#1) to 16a(#n) controls a voltage V1 to be supplied to the associated charging unit 16b(#1) to 16b(#n) which in turn charges the controlled voltage V1.

Since in the embodiment shown in Figs. 5 and 6, the solar batteries 15(#1) to 15(#n) are connected in series with each other, the charged voltage V is equal to the sum of the voltages V1 charged on the respective charging units 16b(#1) to 16b(#n)..

According to the embodiment shown in Figs. 5 and 6, the voltage to be supplied to the ultrasonic output device 13 can be increased and, hence a relatively high ultrasonic sound pressure can be obtained to enhance an anti-animal effect, that is, an effect of repelling the small animal.

Although the present invention has been described in connection with the preferred embodiments thereof with reference to the accompanying drawings, it is to be noted that various changes and modifications are apparent to those skilled in the art. Such changes and modifications are to be understood as included within the scope of the present invention as defined by the appended claims, unless they depart therefrom.

## Claims

1. A solar-powered ultrasonic animal repeller for emitting an ultrasonic wave when an entry of a small animal into a predetermined area is detected by a sensor circuit (10), the ultrasonic animal repeller further comprising an ultrasonic output device (13) for outputting an ultrasonic wave, at least one solar battery (15) for generating an electric power, a charging circuit (16) for charging the electric power generated by the at least one solar battery (15), and a power source circuit (17) for supplying the electric power charged by the charging circuit (16) to the ultrasonic output device (13),
**characterized in that**
the at least one solar battery (15) is mounted on a roof of the ultrasonic animal repeller (1; 1A), and
at least one loudspeaker (13a, 13b) is mounted on a front of the ultrasonic animal repeller (1; 1A) for emitting the ultrasonic wave outputted from the ultrasonic output device (13).

2. A solar-powered ultrasonic animal repeller as claimed in claim 1, **characterized in that** the sensor surveillance area defined by a lens (10a) of the sensor circuit (10) encompasses the ultrasonic output coverage within which the ultrasonic sounds from at least one loudspeaker (13a, 13b) emitting the ultrasonic wave outputted from the ultrasonic output device (13) propagate.

3. The solar-powered ultrasonic animal repeller as claimed in claim 1, **characterized in that** there is provided a plurality of solar batteries (15(#1) to 15(#n)) connected in series with each other.

## Patentansprüche

1. Solarbetriebene Ultraschallvorrichtung zum Vertreiben von Tieren, die eine Ultraschallwelle aussendet, wenn das Eindringen eines kleinen Tiers in einen vorbestimmten Bereich von einer Sensorschaltung (10) erkannt wird, wobei die Ultraschallvorrichtung zum Vertreiben von Tieren ferner aufweist: eine Ultraschallausgabevorrichtung (13) zum Ausgeben einer Ultraschallwelle, wenigstens eine Solarbatterie (15) zum Erzeugen elektrischer Energie, eine Ladeschaltung (16) zum Laden der von der wenigstens einen Solarbatterie (15) erzeugten elektrischen Energie, und eine Energiequellenschaltung (17) zum Liefern der durch die Ladeschaltung (16) geladenen elektrischen Energie an die Ultraschallausgabevorrichtung (13),
**dadurch gekennzeichnet, daß**
die wenigstens eine Solarbatterie (15) auf dem Dach der Ultraschallvorrichtung zum Vertreiben von Tieren (1; 1A) angebracht ist, und
wenigstens ein Lautsprecher (13a, 13b) an der Vorderseite der Ultraschallvorrichtung zum Vertreiben von Tieren (1; 1A) angebracht ist, um die aus der Ultraschallausgabevorrichtung (13) ausgegebene Ultraschallwelle auszugeben.

2. Solarbetriebene Ultraschallvorrichtung zum Vertreiben von Tieren nach Anspruch 1, **dadurch gekennzeichnet, daß** der durch eine Linse (10a) der Sensorschaltung (10) begrenzte Sensorüberwachungsbereich den Ultraschallausgabesendebereich einschließt, in dem sich die Ultraschalltöne von wenigstens einem die von der Ultraschallausgabevorrichtung (13) ausgegebene Ultraschallwelle aussendenden Lautsprecher (13a, 13b) ausbreiten.

3. Solarbetriebene Ultraschallvorrichtung zum Vertreiben von Tieren nach Anspruch 1, **dadurch gekennzeichnet, daß** mehrere in Reihe geschaltete Solarbatterien (15(#1) bis 15(#n)) vorgesehen sind.

## Revendications

1. Dispositif répulsif pour animaux à ultrasons et alimenté par énergie solaire, destiné à émettre une onde ultrasonore lorsqu'une intrusion d'un petit animal dans une zone prédéterminée est détectée par un circuit capteur (10), ledit dispositif répulsif pour animaux à ultrasons comportant de plus un dispositif de sortie ultrasonore (13) destiné à délivrer en sortie une onde ultrasonore, au moins une batterie solaire (15) pour générer une énergie électrique, un circuit de charge (16) pour charger l'énergie électrique générée par la au moins une batterie solaire (15), et un circuit de source d'alimentation (17) pour alimenter l'énergie électrique chargée par le circuit de charge (16) dans le dispositif de sortie ultrasonore (13),
**caractérisé en ce que**
la au moins une batterie solaire (15) est montée sur un toit du dispositif répulsif pour animaux à ultrasons (1 ; 1A), et
au moins un haut-parleur (13a, 13b) est monté sur une partie avant du dispositif répulsif pour animaux à ultrasons (1 ; 1A) pour émettre l'onde ultrasonore délivrée par le dispositif de sortie ultrasonore (13).

2. Dispositif répulsif pour animaux à ultrasons et alimenté par énergie solaire selon la revendication 1, **caractérisé en ce que** la zone de surveillance de détection définie par une lentille (10a) du circuit capteur (10) englobe la couverture de sortie ultrasonore dans laquelle se propagent les sons ultrasonores provenant d'au moins un haut-parleur (13a, 13b) émettant l'onde ultrasonore émise par le dispositif de sortie ultrasonore (13).

3. Dispositif répulsif pour animaux à ultrasons et alimenté par énergie solaire selon la revendication 1, **caractérisé en ce qu'**il est prévu une pluralité de batteries solaires (15(#1) à 15(#n)) connectées les unes aux autres en série.
